Europäisches Patentamt

European Patent Office

Office européen des brevets

(19)

(11) Veröffentlichungsnummer : **0 264 450 B1**

(12) **EUROPÄISCHE PATENTSCHRIFT**

(45) Veröffentlichungstag der Patentschrift :
03.07.91 Patentblatt 91/27

(21) Anmeldenummer : 86904467.7

(22) Anmeldetag : 30.04.86

(86) Internationale Anmeldenummer :
PCT/SU86/00039

(87) Internationale Veröffentlichungsnummer :
WO 87/06512 05.11.87 Gazette 87/24

(51) Int. Cl.⁵ : **B23K 7/06**

(54) **VERFAHREN ZUM THERMISCHEN ENTGRATEN VON METALLISCHEN STÜCKEN.**

(43) Veröffentlichungstag der Anmeldung :
27.04.88 Patentblatt 88/17

(45) Bekanntmachung des Hinweises auf die
Patenterteilung :
03.07.91 Patentblatt 91/27

(84) Benannte Vertragsstaaten :
DE FR GB IT SE

(56) Entgegenhaltungen :
DE-A- 3 204 994
SU-A- 609 606

(73) Patentinhaber : KHARKOVSKY AVIATSIONNY
INST. IMENI N.E. ZHUKOVSKOGO
ul. Chkalova, 17
Kharkov, 310191 (SU)

(72) Erfinder : BOZHKO, Valery Pavlovich
ul. Chkalova, 13-56
Kharkov, 310084 (SU)
Erfinder : STRIZHENKO, Vitaly Evgenievich
ul. Osnovyanskaya, 56
Kharkov, 310010 (SU)
Erfinder : KUSHNARENKO, Sergei
Grigorievich
ul. Staroshishkovskaya, 10-16
Kharkov, 310070 (SU)
Erfinder : LOSEV, Alexei Vasilievich
Saltovskoe shosse, 240a-11
Kharkov, 310171 (SU)
Erfinder : KONONENKO,Vadim Grigorievich
(deceased) (SU)

(74) Vertreter : Finck, Dieter et al
Patentanwälte v. Füner, Ebbinghaus, Finck
Mariahilfplatz 2 & 3
W-8000 München 90 (DE)

EP 0 264 450 B1

## Beschreibung

Die vorliegende Erfindung bezieht sich auf Verfahren zum Entgraten von Werkstücken und betrifft insbesondere Verfahren zum thermischen Entgraten metallischer Wertstücke.

Zugrundeliegender Stand der Technik

Es ist ein Verfahren zum thermischen Entgraten metallischer Werkstücke bekannt, bei dem die zu behandelnden Werkstücke in eine Kammer gebracht, die Kammer mit einem aus Brenngas und Sauerstoff bestehenden Gemisch, dessen Zusammensetzung und Druck in Abhängigkeit von dem Werkstoff und den Abmessungen der zu behandelnden Werkstücke bestimmt wird, gefüllt und dann dieses Gemisch gezündet wird (siehe z.B. US-Patentschrift Nr. 3475229, Klasse 148-9, bekanntgemacht am 28. Oktober 1969 ; SU-Urheberscheinschrift Nr. 616094, Klasse B 23 K 28/00, bekanntgemacht am 25. Juli 1978).

In dem genannten Verfahren müssen die zu behandelnden Werkstücke vorher entfettet und die Feuchtigkeit auf der Oberfläche der Werkstücke muß entfernt werden, bevor sie in die Kammer gebracht werden. Dieser Arbeitsgang ist notwendig, da Öl auf der Oberfläche der Werkstücke in Verbindung mit Sauerstoff zu einem unkontrollierten Brennen des Brenngases mit dem Sauerstoff in der Kammer führt, was den technologischen Arbeitsprozeß stört.

Feuchtigkeit auf der zu behandelnden Oberfläche verursacht einen sprunghaften Anstieg der zum Entgraten notwendigen Energie, da ein Teil der Energie zur Bildung von Wasserdampf verbraucht wird. Der Prozeß des Entfettens und des Trocknens des Oberfläche der Werkstücke ist arbeitsaufwendig und gesundheitsschädlich. Außerdem wird dafür ein spezieller, mit technologischer Ausrüstung versehener Arbeitspaltz benötigt.

Offenbarung der Erfindung

Der Erfindung liegt die Aufgabe zugrunde, ein Verfahren zum thermischen Entgraten metallischer Werkstücke zu Schaffen, bei dem die Werkstücke in der Kammer so behandelt werden, daß auf den arbeitsaufwendigen und gesundheitsschädlichen Prozeß des Entfettens und des Trocknens der Oberfläche der zu behandelnden Werkstücke verzichtet werden kann und das unkontrollierte Entzünden des aus Brenngas und Sauerstoff bestehenden Gemisches in der Kammer beseitigt wird.

Das wird dadurch erzielt, daß in einem Verfahren zum thermischen Entgraten metallischer Werkstücke, bei dem die zu behandelnden Werkstücke in eine Kammer gebracht, die Kammer mit einem aus Brenngas und Sauerstoff bestehenden Gemisch, dessen Zusammensetzung und Druck in Abhängigkeit vom Werkstoff und den Abmessungen der zu behandelnden Werkstücke bestimmt wird, gefüllt und dann dieses Gemisch gezündet wird, gemäß der Erfindung vor dem Füllen der Kammer mit dem aus Brenngas und Sauerstoff bestehenden Gemisch die Kammer mit einem Gemisch aus Brenngas und Luft gefüllt wird, dessen Zusammensetzung und Druck so ausgewählt werden, daß auf der Oberfläche der zu behandelnden Werkstücke das Öl verbrennen und die Feuchtigkeit verdunsten kann, dieses Gemisch zum Zweck des Entfernens des Öls und der Feuchtigkeit von der Oberfläche der Werkstücke gezündet wird und die Verbrennungsprodukte entfernt werden.

Solche eine Durchführung des erfindungsgemäßen Verfahrens zum thermischen Entgraten metallischer Werkstücke ermöglicht eine Verbesserung der Arbeitsbedingungen, eine Verminderung der Menge der Hilfsausrüstung und vermeidet Störungen des technologischen Prozesses bei der Behandlung von Werkstücken.

Kurze Beschreibung der Zeichnungen

Im folgenden wird die Erfindung durch die Beschreibung konkreter Durchführungsbeispiele und die beiliegenden Zeichnungen erläutert, und zwar zeigt

Fig. 1 eine Kammer zum thermischen Entgraten metallischer Werkstücke, in der das erfindungsgemäße Verfahren zum thermischen Entgraten metallischer Werkstücke durchgeführt wird (Längsschnitt) ;

Fig. 2 eine Kurve der zeitlichen Durckänderung in der Kammer, die das erfindungsgemäße Verfahren erläutert, auf der auf der Abszissenachse die Zeit t in sec, und auf der Ordinatenachse der Durck P in MPa abgetragen wird.

Beste Durchführungsvariante der Erfindung

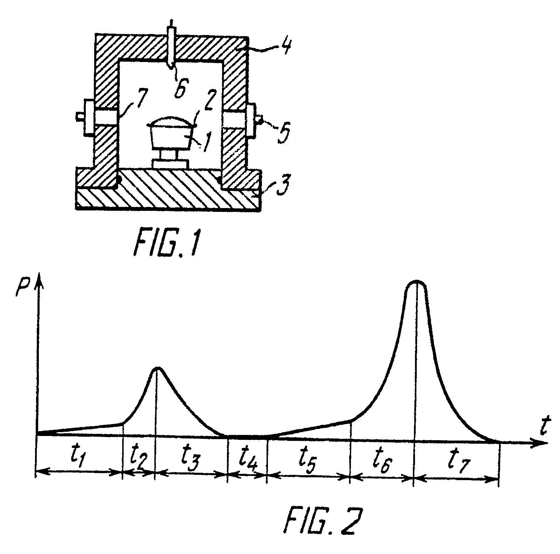

Das erfindungsgemäße Verfahren zum thermischen Entgraten metallischer Werkstücke besteht darin, daß man ein Werkstück 1, das mit Graten 2 behaftet ist, auf den Boden 3 einer Kammer 4 stellt. Danach füllt man die Kammer 4 mit einem aus Brenngas und Luft bestehenden Gemisch (Intervall $t_1$ in Fig. 2), dessen Zusammensetzung und Druck so ausgewählt werden, daß auf der Oberfläche des zu behandelnden Werkstücks 1 (Fig. 1) das Öl verbrennen und die Feuchtigkeit verdunsten kann. Das Gemisch wird in die Kammer 4 durch ein Einlaßventil 5 geleitet. Danach zündet man dieses Gemisch in der Kammer 4 mit Hilfe einer Zündkerze 6, damit das Öl und die Feuchtigkeit von der Oberfläche des Werkstücks 1 entfernt werden (Intervall $t_2$ in Fig. 2), und entfernt die Verbrennungsprodukte durch ein Auslaßventil 7 (Intervall $t_3$ in Fig. 2). Anschließend wird die Kammer 4 mit Luft durchblasen (Intervall) $t_4$ in Fig. 2). Danach füllt man die Kammer 4 durch das Ventil 5 mit einem aus Brenngas und Sauerstoff bestehenden Gemisch (Intervall $t_5$ in Fig. 2), dessen Zusammensetzung und Druck in Abhängigkeit vom Werkstoff und den Abmessungen des zu behandelnden Werkstücks 1 bestimmt werden. Mit Hilfe der Zündkerze 6 wird dann dieses Gemisch gezündet. Unter der Einwirkung der beim Brennen des aus Gas und Dauerstoff bestehenden Gemisches entstehenden hohen Temperatur und des Drucks (Intervall $t_6$ in Fig. 2) werden die Grate 2 des Werkstücks 1 entfernt. Dann läßt man die Verbrennungsabgase durch das Ventil 7 in die Atmosphäre entweichen (Intervall $t_7$ in Fig. 2) und nimmt das behandelte Werkstück 1 aus der Kammer 4 heraus.

Im folgenden werden konkrete Durchführungsbeispiele des erfindungsgemäßen Verfahrens in einer Tabelle angeführt.

Tabelle

| Nr. des Bei- spiels | Werkstoff des zu be- handelnden Werkstücks | Gehalt an Elementen in Masse% | | | | | | |
|---|---|---|---|---|---|---|---|---|
| | | C | Si | Mn | Fe | Cu | Zn | Al |
| 1 | 2 | 3 | 4 | 5 | 6 | 7 | 8 | 9 |
| 1 | Stahl | 0,45 | 0,2 | 0,6 | Rest | - | - | - |
| 2 | Messing | - | - | - | - | 60 | 40 | - |
| 3 | Aluminium- legierung | - | 5,0 | 0,3 | 1,2 | 2,5 | 0,3 | Rest |

Fortsetzung der Tabelle

| Nr. des Bei- spiels | Abmessungen in mm | Gemisch aus Brenngas und Luft, Druck in MPa | | Gemisch aus Brenngas und Sauerstoff, Druck in MPa | |
|---|---|---|---|---|---|
| | | CH$_4$ | Luft | CH$_4$ | O$_2$ |
| 1 | 10 | 11 | 12 | 13 | 14 |
| 1 | 50x50x100 | 0,04-0,08 | 0,4-0,8 | 0,25-0,10 | 0,8-3,0 |
| 2 | 50x50x100 | 0,04-0,06 | 0,4-0,6 | 0,25-0,50 | 0,8-1,5 |
| 3 | 50x50x100 | 0,02-0,04 | 0,2-0,4 | 0,15-0,30 | 0,5-1,0 |

Das erfindungsgemäße Verfahren zum thermischen Entgraten metallischer Werkstücke gewährleistet ein einwandfreies Entgraten, beseitigt die Notwendigkeit des vorher unumgänglichen, arbeitsaufwendigen und gesundheitsschädlichen Entfettens der Oberfläche der Werkstücke und der Beseitigung der Feuchtigkeit von der Oberfläche und gewährleistet einen zuverlässigen technologischen Prozeß durch Beseitigung der unkontrollierten Selbstentzündung des aus Gas und Sauerstoff bestehenden Gemischers in der Kammer.

Industrielle Anwendbarkeit

Die Erfindung kann in Maschinenbaubetrieben zum Entgraten metallischer Werkstücke verwendet werden.

**Ansprüche**

1. Verfahren zum thermischen Entgraten metallischer Werkstücke, bei dem die zu behandelnden Werkstücke in eine Kammer gebracht, die Kammer mit einem aus Brenngas und Sauerstoff bestehenden Gemisch, dessen Zusammensetzung und Druck in Abhängigkeit vom Werkstoff und den Abmessungen der zu behandelnden Werkstücke bestimmt wird, gefüllt und dann dieses Gemisch gezündet wird, dadurch gekennzeichnet, daß vor dem Füllen der Kammer mit dem aus Brenngas und Sauerstoff bestehenden Gemisch die Kammer mit einem Gemisch aus Brenngas und Luft gefüllt wird, dessen Zusammensetzung und Druck so gewählt werden, daß auf der Oberfläche der zu behandelnden Werkstücke das Öl verbrennen und die Feuchtigkeit verdunsten kann, dieses Gemisch zum Zweck des Entfernens des Öls und der Feuchtigkeit von der Oberfläche der Werkstücke gezündet wird und die dabei entstehenden Verbrennungsprodukte entfernt werden.

## Claims

1. A method for thermally deburring metal workpieces, in which the workpieces to be treated are placed in a chamber, the chamber is filled with a mixture of combustion gas and oxygen, the composition and pressure of which is determined depending on the material and dimensions of the workpieces to be treated, and then this mixture is ignited, characterised in that, before being filled with the mixture of combustion gas and oxygen, the chamber is filled with a mixture of combustion gas and air, the composition and pressure of which are selected in such a way that the oil can burn and the moisture evaporate on the surface of the workpieces to be treated; this mixture is ignited for the purpose of removing the oil and moisture from the surface of the workpieces, and the combustion products thus arising are removed.

## Revendications

1. Procédé d'ébarbage thermique de pièces métalliques où les pièces à traiter sont portées dans une chambre, la chambre est remplie d'un mélange se composant d'un gaz combustible et d'oxygène dont la composition et la pression sont déterminées selon le matériau et les dimensions des pièces à traiter, ensuite ce mélange est allumé, caractérisé en ce qu'avant remplissage de la chambre du mélange se composant du gaz combustible et d'oxygène, la chambre est remplie d'un mélange de gaz combustible et d'air dont la composition et la pression sont choisies de façon que sur la surface des pièces à traiter, l'huile puisse brûler et l'humidité puisse s'évaporer, ce mélange est allumé en vue de l'élimination de l'huile et de l'humidité de la surface des pièces et les produits de combustion qui en résultent sont éliminés.

FIG. 1

FIG. 2